(19) Europäisches Patentamt
European Patent Office
Office européen des brevets

(11) EP 2 377 695 A2

(12) **EUROPEAN PATENT APPLICATION**

(43) Date of publication:
**19.10.2011 Bulletin 2011/42**

(51) Int Cl.:
***B60C 9/04*** *(2006.01)* ***B60C 9/00*** *(2006.01)*

(21) Application number: **11002847.9**

(22) Date of filing: **05.04.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.04.2010 JP 2010096247**

(71) Applicant: **Sumitomo Rubber Industries, Ltd.**
**Hyogo-ken (JP)**

(72) Inventor: **Fukumoto, Toru**
**Kobe-shi**
**Hyogo 651-0072 (JP)**

(74) Representative: **Manitz, Finsterwald & Partner GbR**
**Postfach 31 02 20**
**80102 München (DE)**

(54) **Pneumatic tire**

(57) A pneumatic tire comprises a carcass composed of at least one carcass ply made of carcass cords arranged at a cord count E. Each of the carcass cords is composed of two strands final-twisted together. Each of the two strand is made of polyethylene terephthalate fibers first-twisted together. The polyethylene terephthalate fibers of the two strands has a linear density D of not more than 2200 dtex. The linear density D in dtex, the cord count E per 5cm width of the carcass ply, a breaking strength S(N) of the carcass cord, and a Gurley stiffness B (mN) of the carcass cord satisfy conditional equations: $E \leq (-30.6 \text{ Ln } D + 307)$; $B \geq 357/E$; and $s \geq 4161/E$.

**FIG.2(B)**

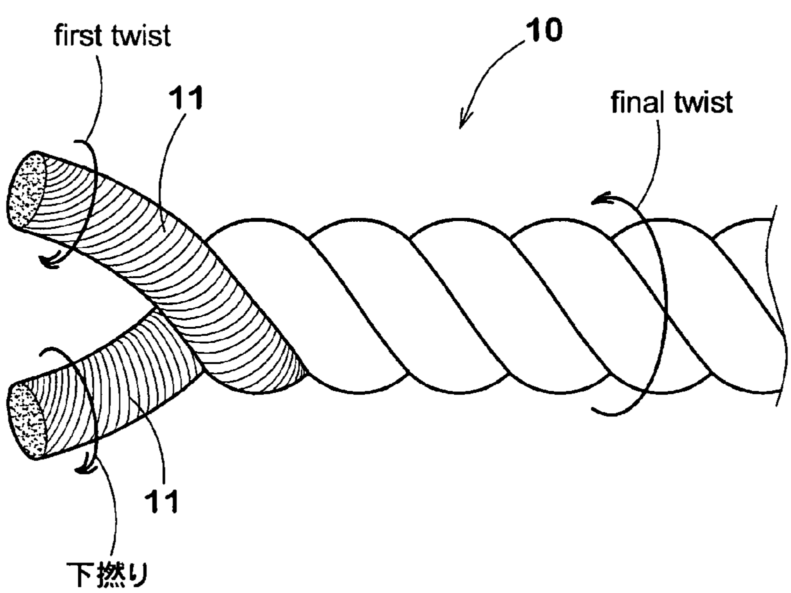




Printed by Jouve, 75001 PARIS (FR)

## Description

Background of the invention

The present invention relates to a pneumatic tire, more particularly to a carcass structure made of polyethylene terephthalate fiber cords capable of improving the tire strength without increasing the tire production cost and the tire weight.

In recent years, global warming has progressed through carbon dioxide emissions, and it is strongly urged to reduce carbon dioxide emissions and automobile exhaust. Therefore, demands for fuel efficiency for cars has become increasingly strong. For the tires, it is imperative to decrease the rolling resistance and the tire weight as far as possible.

In view of the tire weight reduction, it is effective to reduce the weight of the carcass. It is conceivable to use aramid fiber cords or polyethylene naphthalate fiber cords as carcass cords because these kinds of cords are high-modulus cords such that the cords can provide sufficient tensile strength, even if the thickness or diameter is decreased to reduce the carcass weight.

In this case, however, there are problems.

one problem is that the aramid fiber cords and polyethylene naphthalate fiber cords are expensive in comparison with commonly used other organic fiber cords such as polyester and rayon, therefore, it is inevitable that the material cost and the tire production cost are increased.

Another problem is that the aramid fiber cords and polyethylene naphthalate fiber cords are inferior in the fatigue resistance, therefore, in order to provide a necessary strength as a carcass cord, the cord needs to maintain its thickness (linear density) more than a certain value despite the intention. In other words, it is difficult to reduce the cord thickness in order to reduce the carcass weight.

It is also conceivable to use polyethylene terephthalate fiber cords as carcass cords. In comparison with aramid fiber cords and polyethylene naphthalate fiber cords, the polyethylene terephthalate fiber cords are relatively low cost but low modulus. It seemed to be difficult to reduce the cord thickness in order to reduce the carcass weight.

The present inventor has intensively studied how to create a durable lightweight carcass on the basis that polyethylene terephthalate fiber cords are used as carcass cords, and discovered that, by specifically defining the twist structure, linear density, breaking strength and Gurley stiffness of the cord, and the carcass cord count in the carcass ply, it is possible to decrease the weight of the carcass while improving the strength of the carcass.

summary of the invention

It is therefore, an object of the present invention to provide a pneumatic tire in which, by using polyethylene terephthalate fiber cords, the weight and strength of the tire can be improved without increasing the tire production cost.

According to the present invention, a pneumatic tire comprises a carcass composed of at least one carcass ply of carcass cords arranged at a cord count E, wherein

each of the carcass cords is composed of two strands final-twisted together,

each of the two strands is made of polyethylene terephthalate fibers,

the polyethylene terephthalate fibers of the two strands has a linear density D of not more than 2200 dtex, and

the linear density D in dtex, the cord count E (ends/5cm) per 5cm width of the carcass ply, a breaking strength S(N) of the carcass cord, and a Gurley stiffness B (mN) of the carcass cord satisfy conditional equations (1) to (3):

$$(1) \quad E \leq -30.6 \, \mathrm{Ln} \, D + 307$$

$$(2) \quad B \geq 357/E$$

$$(3) \quad S \geq 4161/E$$

wherein Ln means natural logarithm.

since the carcass cord is made from low-cost polyethylene terephthalate (PET) fibers, it is possible to reduce the production cost in comparison with aramid fibers and polyethylene naphthalate fibers.

The linear density D of the carcass cord is limited to relatively low values of 2200 dtex or less, therefore, it is possible to reduce the weight of the tire.

The upper limit of the carcass cord count E (ends/5cm) is defined by (-30.6 1nD + 307) as a function of the linear density D, therefore, as the carcass cord becomes thick, the carcass cord count E decreases. Accordingly, between the adjacent carcass cords, a sufficient distance can be provided, and it is possible to avoid such trouble that the topping rubber is separated from the carcass cords during building the raw tire. This also helps to prevent the adjacent carcass cords from contacting each other during running. Thus, the tire durability can be improved.

The Gurley stiffness B (mN) of the carcass cord is limited relatively higher values of 357/E or more in relation to the carcass cord count E, therefore, the bending rigidity of the unvulcanized carcass ply is secured, and the unvulcanized carcass ply can be prevented from being entangled in the conveyer and being wrinkled, thus, the production efficiency can be improved.

The breaking strength S(N) of the carcass cord is limited to values not less than 4161/E in relation to the carcass cord count E, therefore, as the carcass cord count E decreases, the carcass cord becomes strong and the tire strength is maintained.

The above-mentioned Gurley stiffness is measured according to JIS L1096 ("A" method or Gurley method) for example using a Gurley type stiffness tester (ST-401) manufactured by Tester Sangyo Co,. Ltd. The length of the specimen of the carcass cord between the triangular vane at the upper end of the pendulum (or pointer) which makes contact with the moving specimen and the specimen clamp attached to an arm which rotates about the same geometrical center as the pendulum is 25 mm. Since the Gurley stillness is reported as Gurley units and one Gurley unit is equivalent to one milligram of force (mgf), in order to convert into a SI unit, millNewton (mN), it is need to be multiplied by 9.807 x 10^-3. In this specification, the values of Gurley stiffness refer to the average values of ten specimens indicated in millNewton.

Brief Description of the Drawings

Fig.1 is a schematic cross sectional view of a pneumatic tire according to the present invention.
Fig.2(A) is a cross sectional view of a carcass ply made of carcass cords.
Fig.2(B) is a schematic perspective view of the carcass cord.
Fig.3 is a graph for explaining the range of the carcass cord count E in the carcass ply in relation to the linear density D of the carcass cord.
Fig.4 is a graph for explaining the range of the Gurley stiffness of the carcass cord in relation to the carcass cord count E.
Fig.5 is a graph for explaining the range of the breaking strength of the carcass cord in relation to the carcass cord count E.

Description of the Preferred Embodiments

Embodiments of the present invention will now be described in detail in conjunction with the accompanying drawings.

According to the present invention, a pneumatic tire 1 comprises a tread portion 2, a pair of axially spaced bead portions 4 each with a bead core 5 therein, a pair of sidewall portions 3 extending between the tread edges and the bead portions 4, a carcass 6 extending between the bead portions 4, and a belt 7 disposed radially outside the carcass 6 in the tread portion 2.

Fig.1 shows a passenger car tire as an embodiment of the present invention.

The belt 7 comprises at least two cross breaker plies of reinforcing cords laid at angles of from 10 to 35 degrees with respect to the tire equator C. In this embodiment, the belt 7 is composed of a radially inner breaker ply 7A and a radially outer breaker ply 7B. As to the reinforcing cords, steel cords are used in this embodiment. But, organic fiber cords, e.g. aramid, rayon and the like can be used.

The carcass 6 comprises at least one carcass ply 6A extending between the bead portions 4 through the tread portion 2 and sidewall portions 3 and turned up around the bead core 5 in each of the bead portions 4 from the axially inside to the outside so as to form a pair of turned up portions 6b and a main portion 6a therebetween. The carcass ply 6A is made of carcass cords 10 which are arranged radially at an angle of from 70 to 90 degrees with respect to the tire circumferential direction and rubberized with a topping rubber 12 as shown in Fig.2(A).

In this embodiment, the carcass 6 is composed of only one carcass ply 6A, and the carcass cords 10 are arranged radially at an angle of from 80 to 90 degrees with respect to the tire circumferential direction. The turned up portion 6b extends radially outwardly along the axially outside of a bead apex 8 made of hard rubber disposed between the turned up portion 6b and the main portion 6a and extending radially outwardly from the bead core 5.

Each of the carcass cords 10 is formed by first-twisting a large number of polyethylene terephthalate (PET) fibers together into a strand 11, and then final-twisting the two strands 11 together into the cord 10. In other words, the carcass cord 10 is composed of only two strands 11 formed from polyethylene terephthalate (PET) fibers. The final-twist direction is opposite to the first-twist direction. In comparison with aramid fibers and polyethylene naphthalate (PEN) fibers, PET fibers are superior to fatigue resistance, therefore, it becomes possible to use PET fiber cords whose linear density D is less than 2200 dtex as the carcass cords 10. In other words, relatively thin carcass cords 10 can be used.
In this embodiment, the two strands 11 are identical in the respective linear density. But, it is also possible to use two strands 11 having different linear densities.
In order to provide structural stability for the cord, the number of the first-twist and the number of the final-twist are set at the same value, for example, in a range of from 40 to 80 turns per cord length of 10 cm in view of fatigue resistance.
As the PET fibers are low-cost fibers in comparison with aramid fibers and PEN fibers, the production costs of the carcass cords 10 can be reduced. Further, as the linear density D of the carcass cord 10 can be set at lower values of not more than 2200 dtex, it becomes possible to reduce the weight of the tire.
on the other hand, the elastic modulus of the PET fibers is low in comparison with aramid fibers and PEN fibers,
**[0033]** therefore, it has been believed that it is difficult to provide a sufficient strength for a pneumatic tire whose carcass cords are made of PET fibers. The present inventor made a study in order to increase the strength of the tire whose carcass cords are made of PET fiber, and as a result, it was discovered that, the tire strength can be improved by satisfying the following conditional equations (1) to (3):

$$(1) \qquad E \leq -30.6 \ Ln \ D + 307$$

$$(2) \qquad B \geq 357/E$$

$$(3) \qquad S \geq 4161/E$$

wherein
E is the carcass cord count per 5cm width of the carcass ply,
D is the linear density in dtex of the carcass cord,
B is the Gurley stiffness (mN) of the carcass cord, and
s is the breaking strength (N) of the carcass cord.

The conditional equation (1) provides the upper limit of the cord count E(ends/5cm). In a graph shown in Fig. 3, the ordinate axis presents the cord count E(ends/5cm), and the abscissa axis presents the linear density D in dtex. As shown, the equation (1) describes a smooth downward-sloping curve. By the conditional equation (1), for example, when the linear density D is 1660 dtex, the carcass cord count E is limited to values not more than 80 (ends/5cm), and when the linear density D is 2200 dtex, the carcass cord count E is limited to values not more than 71 (ends/5cm). This means that as the linear density D is increased, the upper limit of the carcass cord count E becomes low. As a result, a positive distance L1 can be secured between the carcass cords 10, and accordingly fretting wear due to contact between the adjacent carcass cords 10 during running is prevented, and the decrease in the tire strength caused by the fretting wear can be prevented. Further, as the carcass cords 10 are surely covered with the topping rubber 12, the durability of the carcass ply 6A is improved. The conditional equation (1) was obtained from a multiple regression analysis of the incidence of fretting wear of the carcass cords when the linear density D and the carcass cord count E were changed.
The conditional equation (2) provides the lower limit of the Gurley stiffness B (mN). In a graph shown in Fig.4, the ordinate axis presents the Gurley stiffness B (mN), and the abscissa axis presents the cord count E (ends/5cm). As shown, the equation (2) describes a smooth downward-sloping curve where as the carcass cord count E decreases, the Gurley stiffness B increases, and the lower limit of the Gurley stiffness B (mN) is set on the upper side of the curve. such a carcass cords 10 are used in the present invention. Accordingly, the unvulcanized carcass ply 6A is increased in the bending rigidity. As a result, during building a raw tire, the unvulcanized carcass ply is prevented from sticking to the conveyer and being entangled in the conveyer. Further, the ply is prevented from getting wrinkles. Therefore, the production efficiency may be improved. The conditional equation (2) was obtained from an analysis of the incidence of trouble during building a raw tire when the Gurley stiffness B and the carcass cord count E were changed.
The conditional equation (3) provides the lower limit of the breaking strength S(N). In a graph shown in Fig.5, the ordinate axis represents the breaking strength S (N), and the abscissa axis represents the cord count E (ends/5cm).

The equation (3) describes a smooth downward-sloping curve where as the carcass cord count E decreases, the breaking strength S increases, and the lower limit of the breaking strength S is set on the upper side of the curve. since such carcass cords 10 are used, the tire strength can be improved. The conditional equation (3) was obtained from a multiple regression analysis of the tire strength when the breaking strength S and the carcass cord count E were changed.

The linear density D of the carcass cord 10 is preferably set to be not more than 1660 dtex, more preferably not more than 1400 dtex in order to effectively bring out the above-mentioned functions. If the linear density D is excessively decreased, the bending rigidity of the carcass ply 6A is decreased, and there is a possibility that the tire strength and the production efficiency are decreased. Therefore, the linear density D of the carcass cord 10 is preferably set to be not less than 560 dtex, more preferably not less than 700 dtex, more preferably not less than 1120 dtex.

In order to obtain sufficient tire strength by preventing an excessive decrease in the carcass cord count E, it is preferred that the carcass cord count E is limited in relation to the linear density D such that the carcass cord count E is not less than 63840/D, more preferably not less than 70560/D.

If the bending rigidity of the carcass cord 10 is excessively increased, there is a possibility that the unvulcanized carcass ply 6A is curled, and thereby the production efficiency is decreased. Therefore, the Gurley stiffness B (mN) is preferably set to be not more than D/75, more preferably not more than D/65.

In order to prevent an excessive increase in the linear density D of the carcass cord 10 and thereby to prevent the tire weight from increasing, it is preferred that the breaking strength S(N) is limited in relation to the carcass cord count E such that the breaking strength S(N) is set to be not more than 10360/E, more preferably not more than 8640/E.

It is possible to adjust the Gurley stiffness B (mN) and the breaking strength S(N) by applying a dip treatment and a stretch treatment to the strands 11 when manufacturing the cord. More specifically, these parameters can be easily adjusted by changing, in the dip treatment, the amount of resin adhered to the strands 11, which resin is contained in the dip coating solution, and by changing, in the stretch treatment, the tension applied to the strands 11.

In this embodiment, in order to increase the Gurley stiffness B (mN) and breaking strength S(N), the tension and the amount of resin adhered are increased.

As to the dip coating solution, for example, a resorcinol-formalin-latex (RFL) solution can be suitably used.

As the PET fibers are inferior in the adhesion to rubber, it is preferable that, before dipping into the RFL solution, the strands 11 are dipped into a pretreatment solution of epoxy compound, isocyanate compound, urea compound or the like and dried.

As to the stretch treatment, the strand 11 is stretched more than 0 % but not more than 4 % while heating the strand 11 at a temperature in a range of from 230 to 245 deg.c for 30 to 120 seconds.

Comparison Tests

Pneumatic tires of size 155/65R13 (wheel rim size: 13X4.5JJ) having the basic structure shown in Fig.1 were prepared and tested.

The specifications of the carcass cords and carcass plies are shown in Table 1 otherwise the tires are of the same specifications.

< Plunger strength test >

The test tire mounted on a wheel rim and inflated to 200 kPa was laid on its side, and onto the sidewall portion of the tire at the maximum tire width position, a plunger of 30kg was let free-fall from a certain height. Then the sidewall portion was visually checked whether or not there was a bulge due to the breakage of the carcass cords. If not, the height was increased and the plunger was again let free-fall. This was repeated increasing the height until a bulge occurred.

From the height at which the bulge occurred and the weight (30 kg) of the plunger, the breaking energy was calculated as the product of the height and weight.

The obtained breaking energy is indicated in Table 1 by an index based on Ex.2 tire being 100, wherein the larger the index number, the higher the strength.

< Material cost >

The material cost of the carcass cords used in the carcass is indicated in Table 1 by an index based on Ref.1 being 100, wherein the smaller the value, the lower the carcass cord cost.

< Separation resistance test >

unvulcanized carcass ply as material was elongated 100 % in its widthwise direction perpendicular to the carcass cords therein and then checked if the topping rubber was separated from the carcass cords.

The results are shown in Table 1, wherein

"o" indicates that the topping rubber was not separated, and "X" indicates that the topping rubber was separated.

<Production efficiency>

with respect to each test tire, fifty raw sample tires were produced, and it was checked if the unvulcanized carcass ply was entangled in the conveyer and/or wrinkled. The results are indicated in Table 1, wherein
"o" indicates that there was no trouble, and
"x" indicates that the trouble was occurred.

From the test results, it was confirmed that the tire strength can be improved while reducing the material cost and tire weight.

Table 1 (1/7)

| Tire | Ref.1 | Ref.2 | Ref.3 | Ref.4 | Ref.5 | Ref.6 | Ref.7 | Ref.8 |
|---|---|---|---|---|---|---|---|---|
| Carcass cord material | aramid | PEN | PET | PET | PET | PET | PET | PET |
| Carcass cord structure | 1100 dtex/2 | 1100 dtex/2 | 2200 dtex/2 | 2200 dtex/2 | 2200 dtex/2 | 2200 dtex/2 | 2200 dtex/2 | 2200 dtex/2 |
| Linear density D (dtex) | 2200 | 2200 | 4400 | 4400 | 4400 | 4400 | 4400 | 4400 |
| Upper limit (-30.6 Ln D + 307) of carcass cord count E | 71.5 | 71.5 | 50.3 | 50.3 | 50.3 | 50.3 | 50.3 | 50.3 |
| carcass cord count E(ends/5cm) | 45 | 45 | 57 | 50 | 25 | 20 | 15 | 13 |
| Lower limit (63840/D) of carcass cord count E | 29.0 | 29.0 | 14.5 | 14.5 | 14.5 | 14.5 | 14.5 | 14.5 |
| Upper limit (D/75) of Gurley stiffness B | 29.3 | 29.3 | 58.7 | 58.7 | 58.7 | 58.7 | 58.7 | 58.7 |
| Gurley stiffness B (mN) | 20 | 16 | 39 | 39 | 39 | 39 | 39 | 39 |
| Lower limit (357/E) of Gurley stiffness B | 7.9 | 7.9 | 6.3 | 7.1 | 14.3 | 17.9 | 23.8 | 27.5 |
| Upper limit (10360/E) of Breaking strength S | 230.2 | 230.2 | 181.8 | 207.2 | 414.4 | 518.0 | 690.7 | 796.9 |
| Breaking strength S(N) | 340 | 161 | 280 | 280 | 280 | 280 | 280 | 280 |
| Lower limit (4161/E) of Breaking strength S | 92.5 | 92.5 | 73.0 | 83.2 | 166.4 | 208.1 | 277.4 | 320.1 |
| Tire weight (kg) | 5.54 | 5.53 | 5.69 | 5.69 | 5.69 | 5.68 | 5.69 | 5.68 |
| Tire strength | 241 | 105 | 238 | 211 | 104 | 86 | 64 | 54 |
| Carcass cord material cost | 100 | 53 | 56 | 55 | 50 | 49 | 48 | 48 |
| Resistance to separation of topping rubber | O | O | X | O | O | O | O | O |
| Production efficiency | O | O | O | O | O | O | O | O |

Table 1 (2/7)

| Tire | Ref.9 | Ref.10 | Ref.11 | Ref.12 | Ref.13 | Ref.14 | Ref.15 | Ex.1 |
|---|---|---|---|---|---|---|---|---|
| Carcass cord material | PET | PET | PET | PET | PET | PET | PET | PET |
| Carcass cord structure | 1670 dtex/2 | 1670 dtex/2 | 1670 dtex/2 | 1670 dtex/2 | 1670 dtex/2 | 1670 dtex/2 | 1100 dtex/2 | 1100 dtex/2 |
| Linear density D (dtex) | 3340 | 3340 | 3340 | 3340 | 3340 | 3340 | 2200 | 2200 |
| Upper limit (-30.6 Ln D + 307) of carcass cord count E | 58.7 | 58.7 | 58.7 | 58.7 | 58.7 | 58.7 | 71.5 | 71.5 |
| carcass cord count E(ends/5cm) | 59 | 57 | 33 | 26 | 19 | 16 | 72 | 70 |
| Lower limit (63840/D) of carcass cord count E | 19.1 | 19.1 | 19.1 | 19.1 | 19.1 | 19.1 | 29.0 | 29.0 |
| Upper limit (D/75) of Gurley stiffness B | 44.5 | 44.5 | 44.5 | 44.5 | 44.5 | 44.5 | 29.3 | 29.3 |
| Gurley stiffness B (mN) | 24 | 24 | 24 | 24 | 24 | 24 | 14 | 14 |
| Lower limit (357/E) of Gurley stiffness B | 6.1 | 6.3 | 10.8 | 14 | 19 | 22 | 5 | 5 |
| Upper limit (10360/E) of Breaking strength S | 175.6 | 181.8 | 313.9 | 398 | 545 | 648 | 144 | 148 |
| Breaking strength S(N) | 226 | 226 | 226 | 226 | 226 | 226 | 148 | 148 |
| Lower limit (4161/E) of Breaking strength S | 70.5 | 73.0 | 126.1 | 160 | 219 | 260 | 58 | 59 |
| Tire weight (kg) | 5.58 | 5.58 | 5.58 | 5.58 | 5.57 | 5.57 | 5.54 | 5.53 |
| Tire strength | 201 | 195 | 111 | 88 | 65 | 53 | 162 | 160 |
| Carcass cord material cost | 34 | 33 | 28 | 25 | 24 | 23 | 31 | 31 |
| Resistance to separation of topping rubber | X | O | O | O | O | O | X | O |
| Production efficiency | O | O | O | O | O | O | O | O |

Table 1 (3/7)

| Tire | Ex.2 | Ex.3 | Ex.4 | Ex.5 | Ref.16 | Ex.6 | Ex.7 | Ex.8 |
|---|---|---|---|---|---|---|---|---|
| Carcass cord material | PET | PET | PET | PET | PET | PET | PET | PET |
| Carcass cord structure | 1100 dtex/2 | 1100 dtex/2 | 1100 dtex/2 | 1100 dtex/2 | 1100 dtex/2 | 830 dtex/2 | 830 dtex/2 | 830 dtex/2 |
| Linear density D (dtex) | 2200 | 2200 | 2200 | 2200 | 2200 | 1660 | 1660 | 1660 |
| Upper limit (-30.6 Ln D + 307) of carcass cord count E | 71.5 | 71.5 | 71.5 | 71.5 | 71.5 | 80.1 | 80.1 | 80.1 |
| carcass cord count E(ends/5cm) | 45 | 40 | 35 | 29 | 24 | 67 | 65 | 50 |
| Lower limit (63840/D) of carcass cord count E | 29.0 | 29.0 | 29.0 | 29.0 | 29.0 | 38.5 | 38.5 | 38.5 |
| Upper limit (D/75) of Gurley stiffness B | 29.3 | 29.3 | 29.3 | 29.3 | 29.3 | 22.1 | 22.1 | 22.1 |
| Gurley stiffness B (mN) | 14 | 14 | 14 | 14 | 14 | 10 | 10 | 10 |
| Lower limit (357/E) of Gurley stiffness B | 8 | 9 | 10 | 12 | 15 | 5 | 5 | 7 |
| Upper limit (10360/E) of Breaking strength S | 230 | 259 | 296 | 357 | 432 | 155 | 159 | 207 |
| Breaking strength S(N) | 148 | 148 | 148 | 148 | 148 | 113 | 113 | 113 |
| Lower limit (4161/E) of Breaking strength S | 92 | 104 | 119 | 143 | 173 | 62 | 64 | 83 |
| Tire weight (kg) | 5.53 | 5.53 | 5.53 | 5.53 | 5.52 | 5.48 | 5.48 | 5.48 |
| Tire strength | 100 | 90 | 77 | 66 | 54 | 115 | 111 | 84 |
| Carcass cord material cost | 27 | 26 | 25 | 24 | 23 | 26 | 26 | 24 |
| Resistance to separation of topping rubber | O | O | O | O | O | O | O | O |
| Production efficiency | O | O | O | O | X | O | O | O |

Table 1 (4/7)

| Tire | Ex.9 | Ex.10 | Ref.17 | Ex.11 | Ex.12 | Ex.13 | Ex.14 | Ex.15 |
|---|---|---|---|---|---|---|---|---|
| Carcass cord material | PET | PET | PET | PET | PET | PET | PET | PET |
| Carcass cord structure | 830 dtex/2 | 830 dtex/2 | 830 dtex/2 | 700 dtex/2 | 700 dtex/2 | 700 dtex/2 | 700 dtex/2 | 700 dtex/2 |
| Linear density D (dtex) | 1660 | 1660 | 1660 | 1400 | 1400 | 1400 | 1400 | 1400 |
| Upper limit (-30.6 Ln D + 307) of carcass cord count E | 80.1 | 80.1 | 80.1 | 85.3 | 85.3 | 85.3 | 85.3 | 85.3 |
| carcass cord count E(ends/5cm) | 42 | 37 | 32 | 82 | 80 | 60 | 52 | 46 |
| Lower limit (63840/D) of carcass cord count E | 38.5 | 38.5 | 38.5 | 45.6 | 45.6 | 45.6 | 45.6 | 45.6 |
| Upper limit (D/75) of Gurley stiffness B | 22.1 | 22.1 | 22.1 | 18.7 | 18.7 | 18.7 | 18.7 | 18.7 |
| Gurley stiffness B (mN) | 10 | 10 | 10 | 8 | 8 | 8 | 8 | 8 |
| Lower limit (357/E) of Gurley stiffness B | 9 | 10 | 11 | 4 | 4 | 6 | 7 | 8 |
| Upper limit (10360/E) of Breaking strength S | 247 | 280 | 324 | 126 | 130 | 173 | 199 | 225 |
| Breaking strength S(N) | 113 | 113 | 113 | 93 | 93 | 93 | 93 | 93 |
| Lower limit (4161/E) of Breaking strength S | 99 | 112 | 130 | 51 | 52 | 69 | 80 | 90 |
| Tire weight (kg) | 5.48 | 5.47 | 5.48 | 5.46 | 5.46 | 5.46 | 5.46 | 5.45 |
| Tire strength | 69 | 63 | 53 | 115 | 113 | 83 | 71 | 62 |
| Carcass cord material cost | 23 | 22 | 21 | 25 | 25 | 23 | 22 | 21 |
| Resistance to separation of topping rubber | O | O | O | O | O | O | O | O |
| Production efficiency | O | O | X | O | O | O | O | O |

Table 1 (5/7)

| Tire | Ref.18 | Ref.19 | Ref.20 | Ex.16 | Ex.17 | Ex.18 | Ref.21 | Ex.19 |
|---|---|---|---|---|---|---|---|---|
| Carcass cord material | PET | PET | PET | PET | PET | PET | PET | PET |
| Carcass cord structure | 700 dtex/2 | 560 dtex/2 | 560 dtex/2 | 560 dtex/2 | 560 dtex/2 | 560 dtex/2 | 560 dtex/2 | 700 dtex/2 |
| Linear density D (dtex) | 1400 | 1120 | 1120 | 1120 | 1120 | 1120 | 1120 | 1400 |
| Upper limit (-30.6 Ln D + 307) of carcass cord count E | 85.3 | 92.2 | 92.2 | 92.2 | 92.2 | 92.2 | 92.2 | 85.3 |
| carcass cord count E(ends/5cm) | 40 | 95 | 93 | 70 | 63 | 57 | 51 | 60 |
| Lower limit (63840/D) of carcass cord count E | 45.6 | 57.0 | 57.0 | 57.0 | 57.0 | 57.0 | 57.0 | 45.6 |
| Upper limit (D/75) of Gurley stiffness B | 18.7 | 14.9 | 14.9 | 14.9 | 14.9 | 14.9 | 14.9 | 18.7 |
| Gurley stiffness B (mN) | 8 | 6 | 6 | 6 | 6 | 6 | 6 | 9 |
| Lower limit (357/E) of Gurley stiffness B | 9 | 4 | 4 | 5 | 6 | 6 | 7 | 6 |
| Upper limit (10360/E) of Breaking strength S | 259 | 109 | 111 | 148 | 164 | 182 | 203 | 173 |
| Breaking strength S(N) | 93 | 73 | 73 | 73 | 73 | 73 | 73 | 93 |
| Lower limit (4161/E) of Breaking strength S | 104 | 44 | 45 | 59 | 66 | 73 | 82 | 69 |
| Tire weight (kg) | 5.45 | 5.43 | 5.43 | 5.43 | 5.43 | 5.42 | 5.43 | 5.46 |
| Tire strength | 55 | 104 | 102 | 78 | 67 | 62 | 55 | 85 |
| Carcass cord material cost | 20 | 25 | 25 | 23 | 22 | 21 | 20 | 23 |
| Resistance to separation of topping rubber | O | X | X | O | O | O | O | O |
| Production efficiency | X | O | O | O | O | O | X | O |

Table 1 (6/7)

| Tire | Ex.20 | Ex.21 | Ref.22 | Ex.22 | Ex.23 | Ex.24 | Ref.23 | Ex.25 |
|---|---|---|---|---|---|---|---|---|
| Carcass cord material | PET | PET | PET | PET | PET | PET | PET | PET |
| Carcass cord structure | 700 dtex/2 | 700 dtex/2 | 700 dtex/2 | 560 dtex/2 | 560 dtex/2 | 560 dtex/2 | 560 dtex/2 | 560 dtex/2 |
| Linear density D (dtex) | 1400 | 1400 | 1400 | 1120 | 1120 | 1120 | 1120 | 1120 |
| Upper limit (-30.6 Ln D + 307) of carcass cord count E | 85.3 | 85.3 | 85.3 | 92.2 | 92.2 | 92.2 | 92.2 | 92.2 |
| carcass cord count E(ends/5cm) | 52 | 46 | 40 | 70 | 63 | 57 | 51 | 70 |
| Lower limit (63840/D) of carcass cord count E | 45.6 | 45.6 | 45.6 | 57.0 | 57.0 | 57.0 | 57.0 | 57.0 |
| Upper limit (D/75) of Gurley stiffness B | 18.7 | 18.7 | 18.7 | 14.9 | 14.9 | 14.9 | 14.9 | 14.9 |
| Gurley stiffness B (mN) | 9 | 9 | 9 | 7 | 7 | 7 | 7 | 5 |
| Lower limit (357/E) of Gurley stiffness B | 7 | 8 | 9 | 5 | 6 | 6 | 7 | 5 |
| Upper limit (10360/E) of Breaking strength S | 199 | 225 | 259 | 148 | 164 | 182 | 203 | 148 |
| Breaking strength S(N) | 93 | 93 | 93 | 73 | 73 | 73 | 73 | 73 |
| Lower limit (4161/E) of Breaking strength S | 80 | 90 | 104 | 59 | 66 | 73 | 82 | 59 |
| Tire weight (kg) | 5.46 | 5.46 | 5.46 | 5.43 | 5.43 | 5.43 | 5.42 | 5.43 |
| Tire strength | 72 | 63 | 56 | 77 | 70 | 60 | 55 | 79 |
| Carcass cord material cost | 22 | 21 | 20 | 23 | 22 | 21 | 20 | 23 |
| Resistance to separation of topping rubber | O | O | O | O | O | O | O | O |
| Production efficiency | O | O | O | O | O | O | O | O |

Table 1 (7/7)

| Tire | Ref.24 | Ref.25 | Ref.26 |
|---|---|---|---|
| Carcass cord material | PET | PET | PET |
| Carcass cord structure | 560 dtex/2 | 560 dtex/2 | 560 dtex/2 |
| Linear density D (dtex) | 1120 | 1120 | 1120 |
| Upper limit (-30.6 Ln D + 307) of carcass cord count E | 92.2 | 92.2 | 92.2 |
| carcass cord count E(ends/5cm) | 63 | 57 | 51 |
| Lower limit (63840/D) of carcass cord count E | 57.0 | 57.0 | 57.0 |
| Upper limit (D/75) of Gurley stiffness B | 14.9 | 14.9 | 14.9 |
| Gurley stiffness B (mN) | 5 | 5 | 5 |
| Lower limit (357/E) of Gurley stiffness B | 6 | 6 | 7 |
| Upper limit (10360/E) of Breaking strength S | 164 | 182 | 203 |
| Breaking strength S(N) | 73 | 73 | 73 |
| Lower limit (4161/E) of Breaking strength S | 66 | 73 | 82 |
| Tire weight (kg) | 5.43 | 5.43 | 5.43 |
| Tire strength | 68 | 61 | 55 |
| Carcass cord material cost | 22 | 21 | 20 |
| Resistance to separation of topping rubber | O | O | O |
| Production efficiency | X | X | X |

## Claims

1. A pneumatic tire comprising a carcass composed of at least one carcass ply extending between bead portions through a tread portion and sidewall portions, the carcass ply made of carcass cords arranged at a cord count E, wherein
each said carcass cord is composed of two strands final-twisted together,
each said strand is made of polyethylene terephthalate fibers,
the polyethylene terephthalate fibers of the two strands has a linear density D of not more than 2200 dtex, and
said linear density D in dtex, said cord count E (ends/5cm) per 5cm width of the carcass ply, a breaking strength S (N) of the carcass cord, and a Gurley stiffness B (mN) of the carcass cord satisfy conditional equations (1) to (3):

$$(1) \qquad E \leq -30.6 \text{ Ln } D + 307$$

$$(2) \qquad B \geq 357/E$$

$$(3) \qquad S \geq 4161/E$$

2. The pneumatic tire according to claim 1, wherein the cord count E (ends/5cm) is not less than 63840/D.

3. The pneumatic tire according to claim 1, wherein the breaking strength S(N) is not more than 10360/E.

4. The pneumatic tire according to claim 2, wherein the breaking strength S(N) is not more than 10360/E.

5. The pneumatic tire according to claim 1, wherein the Gurley stiffness B (mN) is not more than D/75.

6. The pneumatic tire according to claim 2, wherein the Gurley stiffness B (mN) is not more than D/75.

7. The pneumatic tire according to claim 3, wherein the Gurley stiffness B (mN) is not more than D/75.

8. The pneumatic tire according to any one of claims 1-7, wherein the linear density D is not less than 560 dtex.

9. The pneumatic tire according to any one of claims 1-7, wherein the linear density D is not less than 1120 dtex and not more than 1660 dtex.

FIG.1

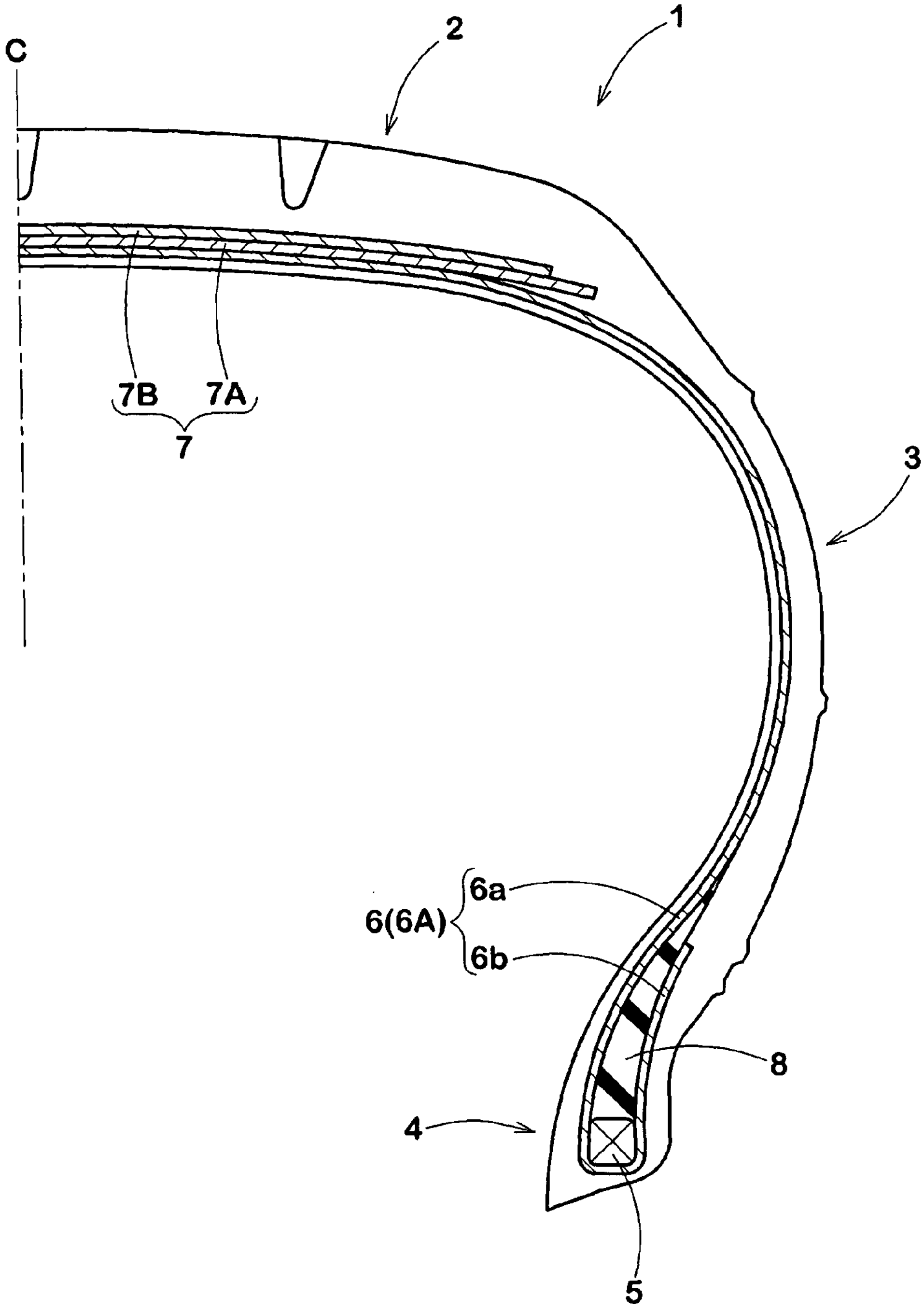

FIG.2(A)

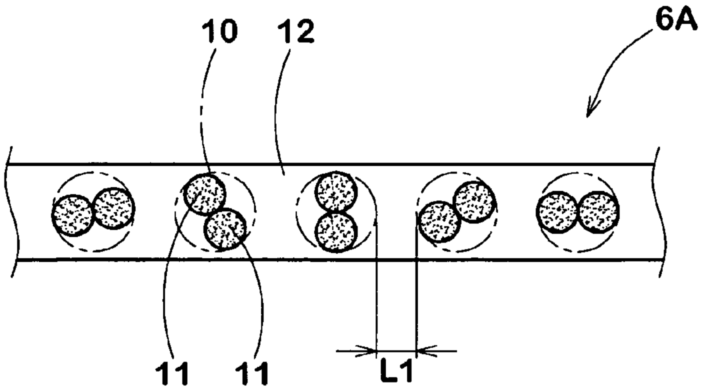


FIG.2(B)

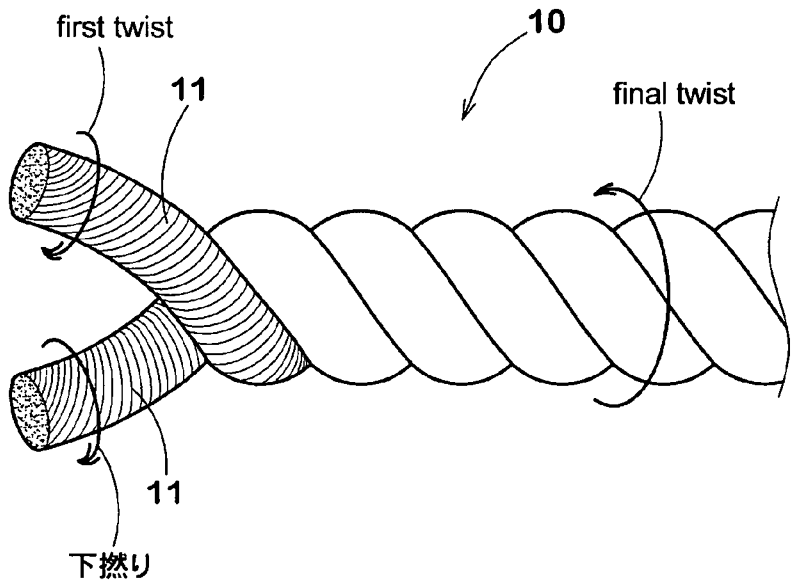

FIG.3

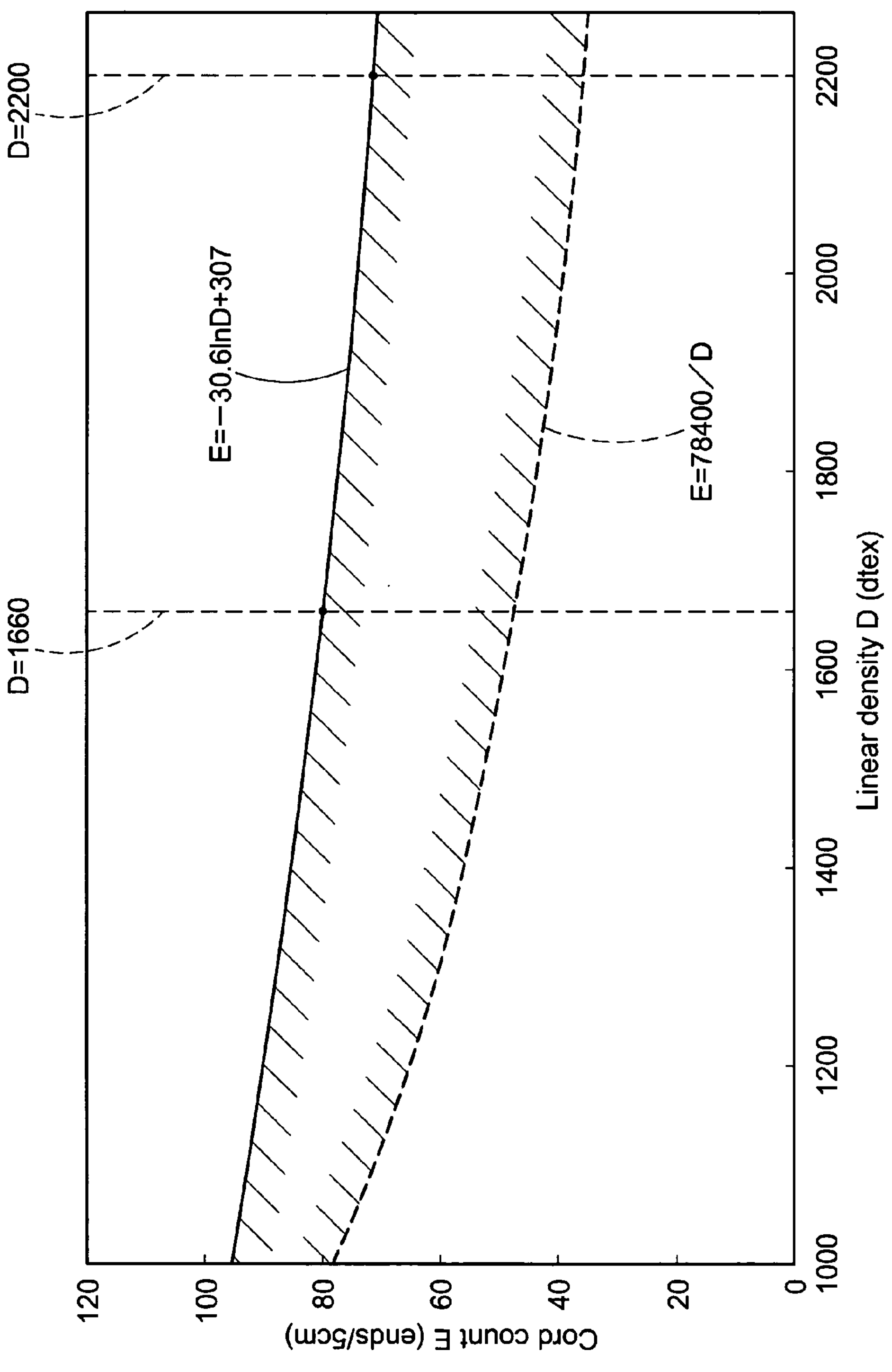

D=1660
D=2200
E=−30.6lnD+307
E=78400/D
Cord count E (ends/5cm)
0
20
40
60
80
100
120
Linear density D (dtex)
1000
1200
1400
1600
1800
2000
2200

FIG.4

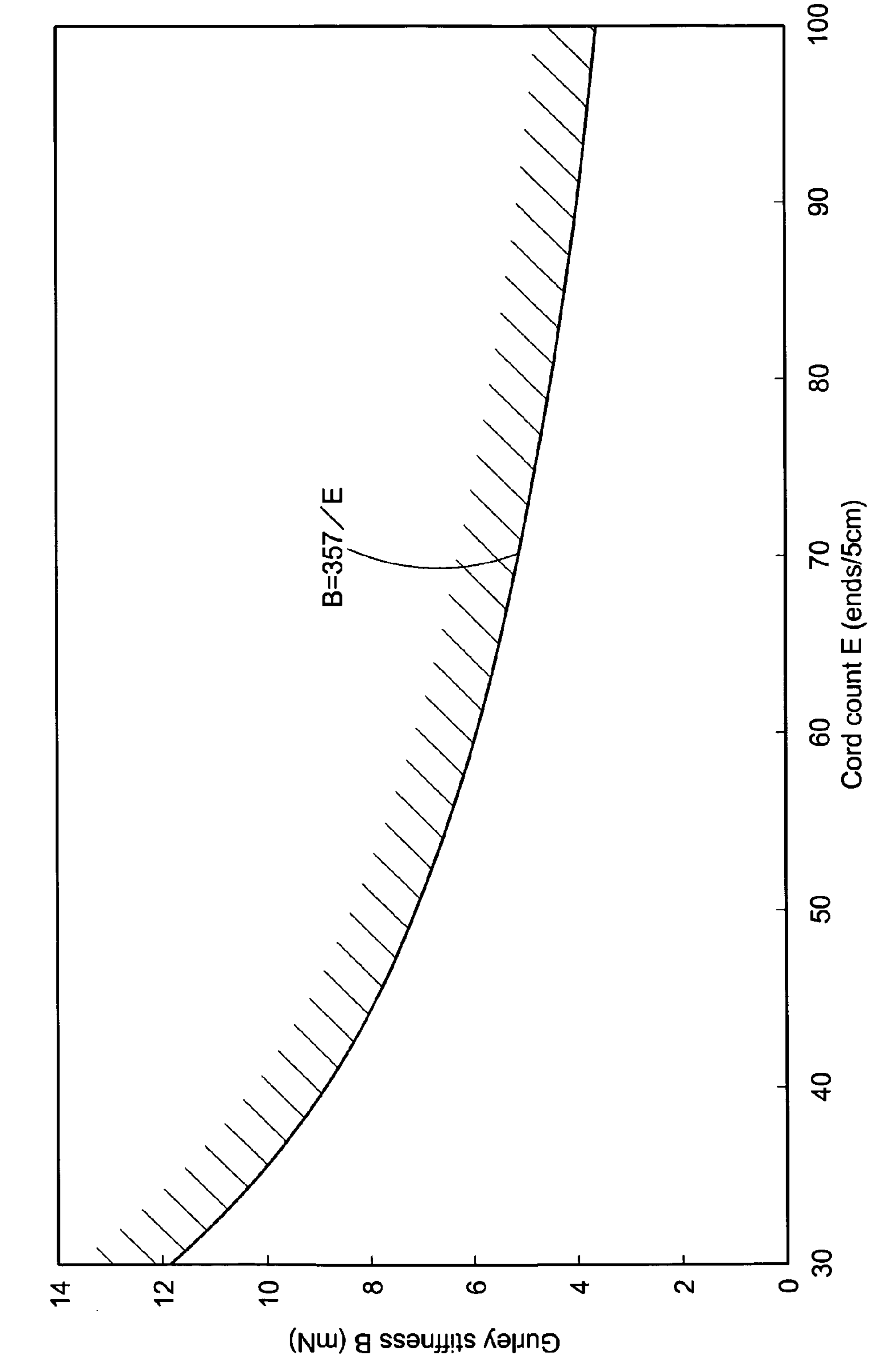
B=357／E
Gurley stiffness B (mN)
Cord count E (ends/5cm)
0
2
4
6
8
10
12
14
30
40
50
60
70
80
90
100

FIG.5

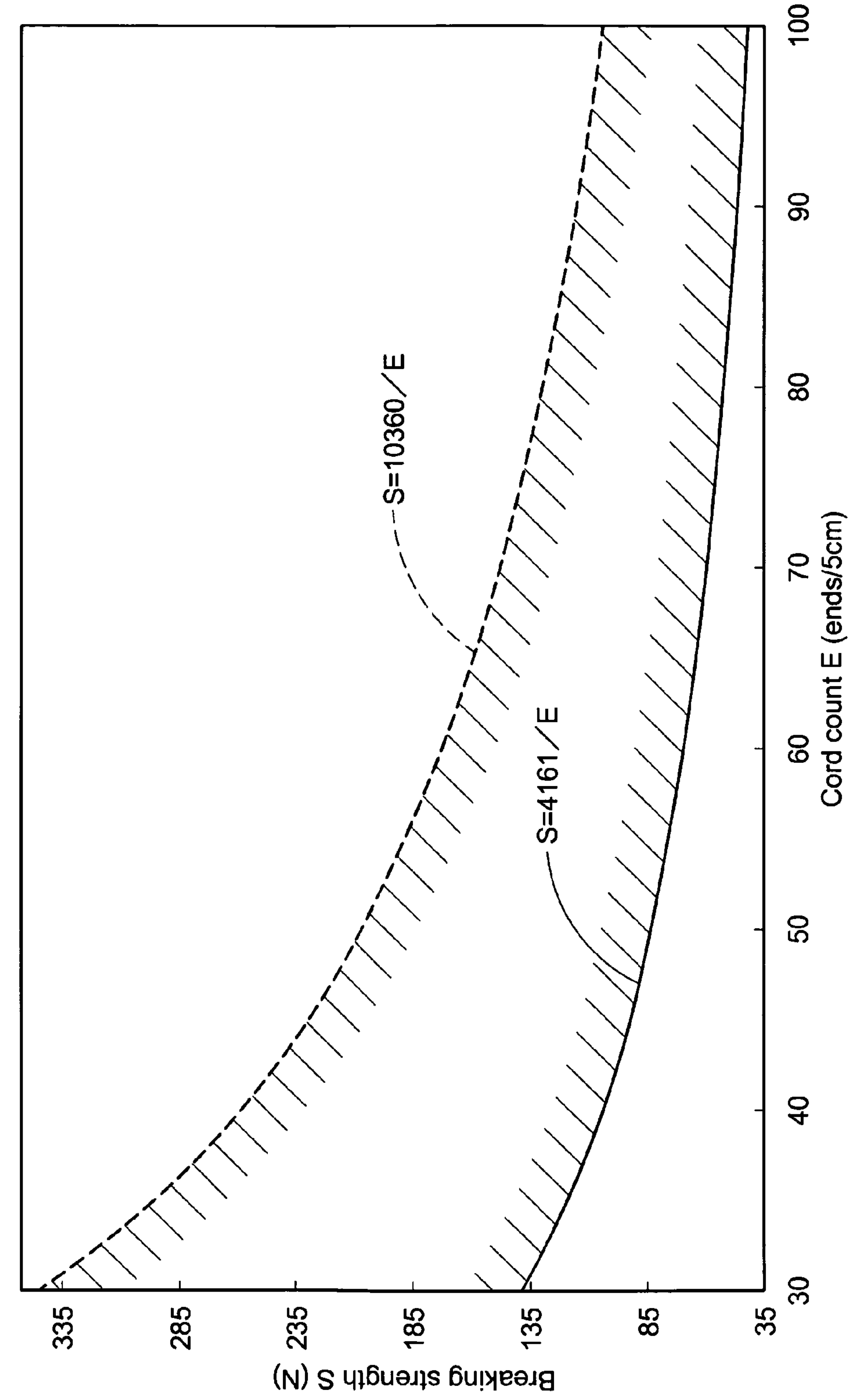
S=10360／E
S=4161／E
Breaking strength S (N)
335
285
235
185
135
85
35
Cord count E (ends/5cm)
30
40
50
60
70
80
90
100